# EUROPEAN PATENT SPECIFICATION

(11) **EP 3 584 227 B1**
(45) Date of publication and mention of the grant of the patent: **13.07.2022**
(21) Application number: 19177928.9
(22) Date of filing: 03.06.2019
(51) Int. Cl.: C03C 3/078, C03C 3/087, C03C 8/04, C03C 8/16, C03C 8/20, C03C 17/04

(54) **METHOD FOR MAKING A SAFETY GLASS AND GLASS OBTAINED THEREBY**
VERFAHREN ZUR HERSTELLUNG EINES SICHERHEITSGLASES UND DADURCH HERGESTELLTES GLAS
PROCÉDÉ DE FABRICATION D'UN VERRE DE SÉCURITÉ ET VERRE AINSI OBTENU

(30) Priority: 04.06.2018 IT 201800006000
(43) Date of publication of application: 25.12.2019
(73) Proprietor: Trivellone, Carlo Hans, 61037 Mondolfo (PU) (IT)
(72) Inventor: Trivellone, Carlo Hans, 61037 Mondolfo (PU) (IT)
(74) Representative: Negrini, Elena

(56) References cited:
- EP-A1- 3 321 238
- EP-B1- 1 313 674
- WO-A1-2012/109417
- WO-A1-2013/166367
- WO-A2-2004/036084
- WO-A2-2009/148502
- WO-A2-2015/000090

## Description

The present invention relates to technical field concerning glass processing and in particular refers to a method for making a safety glass and glass thus obtained.

The known flame resistant glasses are of the "borosilicate" composition type, commercially called "pyrex" ^{®} glasses or the so-called "ceramic glasses" composed of materials with a ceramic or partially ceramic structure.

The borosilicate composition glasses have a completely amorphous structure, while the ceramic glasses have a crystalline or partially crystalline structure and are obtained by slow cooling of the molten glass within special molds, thus realizing ceramic plates by devitrification of the starting material. These known glasses are characterized by the fact that they can remain exposed for a long time to high temperatures and/or direct flame.

The main disadvantage of known glasses is security. In particular, borosilicate glass, due to its chemical composition and heat treatment, has typical characteristics of safety tempered glasses with failure modes characterized by the dispersion of fragments (flakes) of small dimensions and not sharp. For this reason, it is necessary to use these glasses in double-glazing made up structures when dividing walls and partition walls have to be realized.

The safety issue is also present in the "ceramic glass" used in dividing walls, since the ceramic nature is characterized by atomic structures of crystalline (or partially crystalline) type which determines an unsafe rupture of the glass in elongated and sharp fragments, the so-called "spears".

It is therefore necessary to use these ceramic glasses in a stratified form, that is by interposing a plastic film between two coupled glasses so as to avoid the dispersion of dangerous sharp fragments in case of accidental breakage of said glasses.

A further disadvantage of ceramic glasses lies in the so-called "mechanical appearance" that is in the fact that these glasses are never completely transparent, but have a straw yellow color, and are impossible to curve and/or bend using the common technologies.

Another disadvantage of known glasses with "borosilicate" composition and "ceramic glass" concerns the limited availability in the sizes of the obtained slabs, in the thicknesses, in the dimensions and in the colors so causing serious limitations of logistic-productive order on the realization of structural, functional and decorative elements to be made using these materials.

Another disadvantage lies in the fact that these borosilicate or ceramic glasses are considered special and therefore are produced by few producers with a consequent high unit cost.

A further disadvantage of the mentioned known glasses is that, as being transparent or almost transparent to infrared radiation, they are not very efficient when used in the production of induction cooking tops where they allow the infrared radiation, emitted by the bottom of the pot, pan or the like, to propagate through them towards the induction elements thus allowing a dispersion of thermal energy.

An object of the present invention is to propose a sodium-calcium composed safety glass of greater thermal and mechanical resistance.

A further object is to propose a method for making said sodium-calcium glass.

Another object is to propose a glass and a method for making it with low costs and with widely variable formats that are easy to store.

A further object is to propose a glass almost opaque to the infrared radiation and particularly suitable, for example, for the carrying out induction cooking tops while also increasing their energy efficiency.

Document WO2004/036084 discloses a method that involves placing a vitreous frit on a surface of a glass substrate, heating said frit and substrate to temperatures between 600°C and 650°C and cooling them.

The characteristics of the invention are outlined below with particular reference to the accompanying drawings in which:
- figure 1 schematically illustrates the various phases of the method for producing the glass subject of the invention;
- figure 2 shows schematically a variant of the method shown in figure 1.

The present invention relates to a method for making a safety glass according to claim 1.

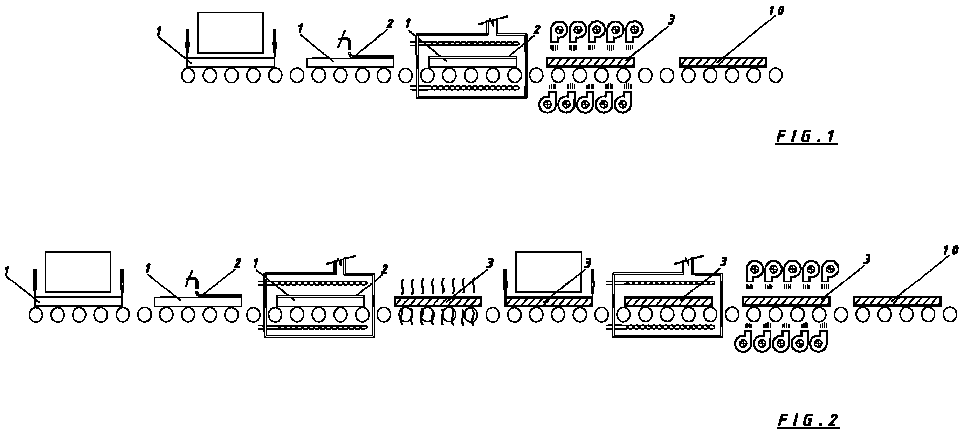

A preferred embodiment comprises the following steps schematized in Figure 1:
- if necessary, roughing a glass plate 1 in the sense of including the processing of the plate 1 to respect the dimensions and the shape desired for the glass to be made;
- roughening at least one surface, i.e. a face, of said plate 1 ;
- deposing a vitreous frit 2, i.e. a formulation under fluid form with the composition shown below, on said roughened surface of the plate 1;
- heating plate 1 and frit 2 in an oven at temperatures ranging from 600°C to 700°C, even if the optimum temperature is 650°C, to allow vitrification of frit 2 on plate 1;
- rapidly cooling the plate 1 and the frit 2 in times varying from 60 to 1000 seconds, preferably in a time of 40 seconds for each mm of thickness, to obtain the safety glass 10 with a mechanical strength σr ranging from 90 MPa to 150 MPa, typically around 120 MPa, and with direct flame resistance for temperatures higher than 400° C and resistance to temperature difference ΔT between the surface exposed to the flame and the opposite surface ΔT> 250°K.

The method of the invention provides for that said step of roughening at least said surface of the plate 1 destined to receive the vitreous frit 2 being carried out by means of at least one among sandblasting, opacification by laser, sanding or the like, to obtain a roughness of said surface between 0,02 µm and 0,15 µm, preferably between 0,10 µm and 0,15 µm.

The method further provides for sandblasting using at least one of sodium bicarbonate crystals (NaHCO₃), silicon and/or derivatives thereof, crystals or particles of Aluminum Oxide (Al₂O₃), Silicon Carbide (SiC), of Zirconium Oxide (ZrO₂), of Cerium Oxide (Ce₂O₃), it is also provided that the sanding is carried out using at least one of abrasive paper, abrasive sponge, grinding wheel and the like.

The possible phase of the rough method of the plate 1 comprises at least one of cutting, shaping and drilling of said glass plate 1 before placing the vitreous frit 2 on it.

A variant of the method, shown schematically in Figure 2, after the heating of the plate 1 and of the frit 2, provides to slowly cooling the latter in varying lengths of time, depending on the thickness of the plate, from 600 to 7.200 seconds, thus obtaining a semi-finished glass 3 which can still be shaped and sized as desired. This semi-finished product is in fact still workable since it has not undergone the quenching phase (for example through the rapid cooling of the plate 1 and frit 2).

The slow cooling occurs by forced blowing of refrigerant gas, typically air, according to the techniques for the production of so-called "hardened" and/or "annealed" glass.

The glass thus obtained is considered a semi-finished product as it can undergo subsequent mechanical processing and/or heat treatments that could not be supported by glasses that have already undergone thermal tempering processes.

The variant of the method therefore provides to further rough of the semi-finished glass 3 for carrying it to the dimensions and shapes of the glass sheet that is to be made.

The variant of the method then proceeds with the phases of:
- heating the semi-finished glass 3 at a temperature ranging from 600°C to 700°C, preferably at a temperature of 620°C;
- rapidly cool the plate 1 and the frit 2 in times varying from 60 to 1.000 seconds, preferably in a time of 40 seconds for each mm of thickness, to obtain the safety glass 10 with mechanical resistance σr ranging from 90 MPa to 150 MPa, typically around 120 MPa, and with thermal resistance to direct flame for temperatures greater than 400°C and resistance to the temperature difference ΔT between the surface exposed to the flame and the opposite surface ΔT> 250°K.

In the preferred embodiment of the method and in its variant, the vitreous frit 2 is deposited in a thickness varying between 5 µm to 300 µm , preferrably by printing and/or painting and/or transfer.

In both embodiments of the method, rapid cooling, in accordance with the techniques in use for the production of thermal tempered glass, is obtained by forced blowing of refrigerant gas mixtures having the following typical composition:
- N₂ at 78,09%;
- O₂ at 20,94%;
- Ar at 0,93%;
- CO₂ at 0,04%.

The invention also refers to a safety glass obtained directly by the method described above in both the preferred embodiment and in its variant.

The safety glass is based on the use of sodium-calcium glass in plates whose fluid formulation includes on average:
- SiO₂ in a variable percentage between 68,0% and 74,5%, preferably 72,8%;
- Al₂O₃ + TiO₂ in a variable percentage between 0,0% and 4,0%, preferably 0,7%;
- Fe₂O₃ in a variable percentage between 0,0% and 0,45%, preferably 0,09%;
- CaO in a variable percentage between 8,0% and 14,0%, preferably 8,6%;
- MgO in a variable percentage between 0,0% and 4,0%, preferably 3,61%;
- Na₂O in a percentage varying between 10,0% and 16,0%, preferably 13,7%;
- K₂O in a variable percentage between 0,0% and 4,0%, preferably 0,2%;
- SO₃ in a variable percentage between 0,0% and 0,3%, preferably 0,3%.

The vitreous frit 2 has the following typical composition:
- (methyl-2-methoxyethoxy) propanol with a proportion of 150.000 mg/kg;
- TiO₂ + SnO (on mica) with a proportion of 20.000 mg/kg;
- B (compounds) with a proportion of 9.000 mg/kg;
- Al (compounds) with a proportion of 13.000 mg/kg;
- Zn (compounds) with a proportion of 12.500 mg/kg.

The main advantage of the present invention is that of providing a safety glass of greater thermo-mechanical strength with a sodium-calcium composition.

A further advantage is that of providing a method for making such a sodium-calcium glass.

Another advantage is to supply a glass and a method to make it with low costs and with widely varying formats and facilitated management and storage.

## Claims

1. Method for making a safety glass (10) **characterized in that** it comprises the steps of:
- roughening at least one glass plate (1);
- placing a vitreous frit (2) on said at least surface of the plate (1);
- heating from 600°C to 700°C, preferably 650°C, the plate (1) and the frit (2) to vitrify the latter on the plate (1);
- cooling said plate (1) and said vitreous frit (2) to obtain a semi-finished product (3);
where said roughening comprises the phase to roughen at least said surface of the plate (1) assigned to receive the vitreous frit (2) by means of at least one among sandblasting, opacification by laser or sanding, to obtain a roughness of said surface ranging from 0,02 µm to 0,15 µm.

2. Method according to claim 1 **characterized in that** the sandblasting is carried out using at least one among sodium bicarbonate (NaHCO₃) crystals, silicon crystals and/or derivates thereof, crystals or particles of Aluminium oxide (Al₂O₃), of Silicon carbide (SiC), of Zirconium Oxide (ZrO₂), of Cerium oxide (Ce₂O₃) and **in that** the sanding is carried out using at least one among abrasive paper, abrasive sponge and grinding wheel.

3. Method according to claim 1 or 2 **characterized in** reaching a roughness of said surface ranging from 0,10 µm to 0,15 µm.

4. Method according to any claim 1 - 3 **characterized in** cutting and/or shaping and/or drilling said glass plate (1) before placing the vitreous frit (2) on it.

5. Method according to any of the preceding claims **characterized in that** the plate (1) and the frit (2) are rapidly cooled in variable times from 60 to 1000 seconds, preferably in 40 seconds for each mm of thickness, to obtain the safety glass (10) with mechanical resistance (σr) ranging from 90 MPa to 150 MPa, preferably the latter is 120 MPa, and with direct flame thermal resistance for temperatures higher than 400°C and resistance to temperature difference (ΔT) between the surface exposed to the direct flame and the opposite surface ΔT> 250°K.

6. Method according to any of claims 1-4 **characterized in that** the plate (1) and the frit (2) are slowly cooled in variable times, according to the thickness of the slab, ranging from 600 to 7.200 seconds to obtain the semi-finished glass (3).

7. Method according to claim 6 **characterized in that**:
- the semi-finished glass (3) is further roughened;
- heating the semi-finished glass (3) at a temperature ranging from 600°C to 700°C, preferably at a temperature of 620°C;
- rapidly cooling the semi-finished product (3) in times varying from 60 to 1.000 seconds, typically 40 seconds for each mm of thickness, to obtain the safety glass (10) with mechanical resistance (σr) ranging from 90 MPa to 150 MPa, typically about 120 MPa and with thermal resistance to direct flame for temperatures greater than 400° C and resistance to temperature difference (ΔT) between the surface exposed to the flame and the opposite surface ΔT> 250°K.

8. Method according to any of the previous claims **characterized in that** the glass frit (2) is deposited with a thickness varying between 5µ and 300µ.

9. Method according to any of the previous claims **characterized in that** the glass frit (2) is deposited by printing and/or painting and/or transferring.

10. Glass made according to the method of any of the preceding claims **characterized in that** it consists of glassy material in plate (1) comprising:
- SiO₂ in a variable percentage between 68,0% and 74,5%, preferably 72,8%;
- Al₂O₃ + TiO₂ in a variable percentage between 0,0% and 4,0%, preferably 0,7%;
- Fe₂O₃ in percentages ranging from 0,0% to 0,45%, preferably 0,09%;
- CaO in percentage varying between 8,0% and 14,0%, preferably 8,6%;
- MgO in percentage ranging from 0,0% to 4,0%, preferably 3,61%;
- Na₂O in percentages ranging from 10,0% to 16,0%, preferably 13,7%;
- K₂O in percentages ranging from 0,0% to 4,0%, preferably 0,2%;
- SO₃ in a variable percentage between 0,0% and 0,3%, preferably 0,3%.

11. Glass according to claim 10 **characterized in that** it comprises a glass frit (2) of the composition:
- TiO₂ + SnO on mica with a proportion of 20.000 mg/kg;
- B compounds with a proportion of 9.000 mg/kg;
- Al compounds with a proportion of 13.000 mg/kg;
- Zn compounds with a proportion of 12.500 mg/kg;
- (methyl-2-methoxyethoxy) propanol with a ratio of 150.000 mg/kg.

## Patentansprüche

1. Verfahren zum Herstellen eines Sicherheitsglases (10), **dadurch gekennzeichnet, dass** es die Schritte umfasst:
- Aufrauen von mindestens einer Glasplatte (1);
- Platzieren einer Glasfritte (2) auf der mindestens einen Oberfläche der Platte (1);
- Erhitzen der Platte (1) und der Fritte (2) von 600°C auf 700°C, vorzugsweise 650°C, um letztere auf der Platte (1) zu verschmelzen;
- Abkühlen der Platte (1) und der Glasfritte (2), um ein halb fertiges Produkt (3) zu erhalten;
wobei das Aufrauen die Phase umfasst, bei der mindestens die Oberfläche der Platte (1) aufgeraut wird, die zugeordnet ist, um die Glasfritte (2) mittels zumindest der Folgenden aufzunehmen: Sandstrahlen, Eintrüben durch Laser oder Schleifen, um eine Rauigkeit der Oberfläche im Bereich von 0,02 µm bis 0,15 µm zu erhalten.

2. Verfahren nach Anspruch 1, **dadurch gekennzeichnet, dass** das Sandstrahlen durch Verwenden von mindestens einem der Folgenden durchgeführt wird: Natriumbicarbonat (NaHCO₃)-Kristallen, Siliziumkristallen und/oder Derivaten davon, Kristalle oder Partikel von Aluminiumoxid (Al₂O₃), von Siliziumcarbid (SiC), von Zirkoniumoxid (ZrO₂), von Ceriumoxid (Ce₂O₃) und dadurch, dass das Schleifen durchgeführt wird durch Verwenden von mindestens einem der Folgenden: Schleifpapier, Schleifschwamm und Schleifscheibe.

3. Verfahren nach Anspruch 1 oder 2, **dadurch gekennzeichnet, dass** eine Rauigkeit der Oberfläche im Bereich von 0,10 µm bis 0,15 µm erreicht wird.

4. Verfahren nach einem der Ansprüche 1-3, **gekennzeichnet durch** Schneiden und/oder Formen und/oder Bohren der Glasplatte (1) bevor die Glasfritte (2) darauf platziert wird.

5. Verfahren nach einem der vorhergehenden Ansprüche, **dadurch gekennzeichnet, dass** die Platte (1) und die Fritte (2) in variablen Zeiträumen von 60 bis 1000 Sekunden rapide herabgekühlt werden, vorzugsweise innerhalb von 40 Sekunden für jeden Millimeter Dicke, um das Sicherheitsglas (10) mit mechanischem Widerstand (σr) im Bereich von 90 MPa bis 150 MPa zu erhalten, vorzugsweise liegt Letzterer bei 120 MPa, und mit einem direkten thermischen Flammwiderstand für Temperaturen über 400°C, und Widerstand gegenüber einem Temperaturunterschied (ΔT) zwischen der Oberfläche, die der direkten Flamme ausgesetzt ist und der gegenüberliegenden Oberfläche ΔT>250°K.

6. Verfahren nach einem der Ansprüche 1-4, **dadurch gekennzeichnet, dass** die Platte (1) und die Fritte (2) in variablen Zeiträumen im Bereich von 600 bis 7.200 Sekunden je nach Dicke der Platte langsam herabgekühlt werden, um das halbfertige Glas (3) zu erhalten.

7. Verfahren nach Anspruch 6, **dadurch gekennzeichnet dass**:
- das halbfertige Glases (3) weiter aufgeraut wird;
- Erhitzen des halbfertigen Glases (3) auf eine Temperatur im Bereich von 600°C bis 700°C, vorzugsweise auf eine Temperatur von 620°C;
- rapides Abkühlen des halb fertigen Produkts (3) in unterschiedlichen Zeiträumen von 60 bis 1.000 Sekunden, üblicherweise 40 Sekunden für jeden Millimeter Dicke, um das Sicherheitsglas (10) mit mechanischem Widerstand (σr) im Bereich von 90 MPa bis 150 MPa zu erhalten, üblicherweise ungefähr 120 MPa und mit thermischem Widerstand gegenüber der direkten Flamme bei Temperaturen über 400°C und Widerstand gegenüber einem Temperaturunterschied (ΔT) zwischen der Oberfläche, die der Flamme ausgesetzt ist, und der gegenüberliegenden Oberfläche ΔT> 250°K.

8. Verfahren nach einem der vorhergehenden Ansprüche, **dadurch gekennzeichnet, dass** die Glasfritte (2) mit einer Dicke abgelegt wird, die zwischen 5 µm und 300 µm variiert.

9. Verfahren nach einem der vorhergehenden Ansprüche, **dadurch gekennzeichnet, dass** die Glasfritte (2) durch Drucken und/oder Malen und/oder Übertragen abgelegt wird.

10. Glas, hergestellt nach dem Verfahren gemäß einem der vorhergehenden Ansprüche, **dadurch gekennzeichnet, dass** es aus einem gläsernen Material der Platte (1) besteht, umfassend:
- SiO₂ in einem variablen Prozentsatz zwischen 68,0% und 74,5%, vorzugsweise 72,8%;
- Al₂O₃ + TiO₂ in einem variablen Prozentsatz zwischen 0,0 % und 4,0 %, vorzugsweise 0,7%;
- Fe₂O₃ in Prozentsätzen im Bereich von 0,0% bis 0,45%, vorzugsweise 0,09%;
- CaO in einem variierenden Prozentsatz zwischen 8,0% und 14,0%, vorzugsweise 8,6%;
- MgO in einem Prozentsatz im Bereich von 0,0% bis 4,0%, vorzugsweise 3,61%;
- Na₂O in einem Prozentsatz im Bereich von 10,0% bis 16,0%, vorzugsweise 13,7%;
- K₂O in einem Prozentsatz im Bereich von 0,0% bis 4,0%, vorzugsweise 0,2%;
- SO₃ in einem variablen Prozentsatz zwischen 0,0% und 0,3%, vorzugsweise 0,3%.

11. Glas nach Anspruch 10, **dadurch gekennzeichnet, dass** es eine Glasfritte der folgenden Zusammensetzung umfasst:
- TiO₂ + SnO auf Glimmer mit einem Anteil von 20.000 mg/kg;
- B-Verbindungen mit einem Anteil von 9.000 mg/kg;
- Al-Verbindungen mit einem Anteil von 13.000 mg/kg;
- Zn-Verbindungen mit einem Anteil von 12.500 mg/kg;
- (Methyl-2-Methoxyethoxy)-Propanol mit einem Verhältnis von 150.000 mg/kg.

## Revendications

1. - Procédé de fabrication d'un verre de sécurité (10), **caractérisé par le fait qu'**il comprend les étapes consistant à :
- rendre rugueuse au moins une plaque de verre (1) ;
- placer une fritte vitreuse (2) sur ladite au moins une surface de la plaque (1) ;
- chauffer de 600°C à 700°C, de préférence à 650°C, la plaque (1) et la fritte (2) pour vitrifier cette dernière sur la plaque (1) ;
- refroidir ladite plaque (1) et ladite fritte vitreuse (2) pour obtenir un produit semi-fini (3) ;
où ladite rugosification comprend la phase consistant à rendre rugueuse au moins ladite surface de la plaque (1) destinée à recevoir la fritte vitreuse (2) au moyen d'au moins l'un parmi le sablage, l'opacification par laser ou le ponçage, pour obtenir une rugosité de ladite surface se situant dans la plage de 0,02 µm à 0,15 µm.

2. - Procédé selon la revendication 1, **caractérisé par le fait que** le sablage est effectué à l'aide d'au moins l'un parmi les cristaux de bicarbonate de sodium (NaHCO₃), les cristaux de silicium et/ou leurs dérivés, les cristaux ou particules d'oxyde d'aluminium (Al₂O₃), de carbure de silicium (SiC), d'oxyde de zirconium (ZrO₂), d'oxyde de cérium (Ce₂O₃), et **par le fait que** le ponçage est effectué à l'aide d'au moins l'un parmi le papier abrasif, l'éponge abrasive et une roue de meulage.

3. - Procédé selon l'une des revendications 1 ou 2, **caractérisé par le fait que** l'on atteint une rugosité de ladite surface se situant dans la plage de 0,10 µm à 0,15 µm.

4. - Procédé selon l'une quelconque des revendications 1 à 3, **caractérisé par le fait que** l'on coupe et/ou façonne et/ou perce ladite plaque de verre (1) avant de placer la fritte vitreuse (2) sur celle-ci.

5. - Procédé selon l'une quelconque des revendications précédentes, **caractérisé par le fait que** la plaque (1) et la fritte (2) sont refroidies rapidement en des temps variables de 60 à 1000 secondes, de préférence en 40 secondes pour chaque mm d'épaisseur, pour obtenir le verre de sécurité (10) ayant une résistance mécanique (or) se situant dans la plage de 90 MPa à 150 MPa, de préférence cette dernière étant de 120 MPa, et ayant une résistance thermique à la flamme directe pour des températures supérieures à 400°C et une résistance à une différence de température (ΔT) entre la surface exposée à la flamme directe et la surface opposée ΔT > 250°K.

6. - Procédé selon l'une quelconque des revendications 1 à 4, **caractérisé par le fait que** la plaque (1) et la fritte (2) sont refroidies lentement en des temps variables, selon l'épaisseur de la dalle, se situant dans la plage de 600 à 7200 secondes pour obtenir le verre semi-fini (3).

7. - Procédé selon la revendication 6, **caractérisé par le fait que** :
- le verre semi-fini (3) est encore rendu rugueux ;
- chauffer le verre semi-fini (3) à une température se situant dans la plage de 600°C à 700°C, de préférence à une température de 620°C ;
- refroidir rapidement le produit semi-fini (3) en des temps variant de 60 à 1000 secondes, typiquement de 40 secondes pour chaque mm d'épaisseur, pour obtenir le verre de sécurité (10) ayant une résistance mécanique (or) se situant dans la plage de 90 MPa à 150 MPa, typiquement d'environ 120 MPa, et ayant une résistance thermique à la flamme directe pour des températures supérieures à 400° C et une résistance à une différence de température (ΔT) entre la surface exposée à la flamme et la surface opposée ΔT >250°K.

8. - Procédé selon l'une quelconque des revendications précédentes, **caractérisé par le fait que** la fritte de verre (2) est déposée avec une épaisseur variant entre 5µ et 300µ.

9. - Procédé selon l'une quelconque des revendications précédentes, **caractérisé par le fait que** la fritte de verre (2) est déposée par impression et/ou peinture et/ou transfert.

10. - Verre fabriqué selon le procédé de l'une quelconque des revendications précédentes, **caractérisé par le fait qu'**il consiste en un matériau vitreux en plaque (1) comprenant :
- SiO₂ dans un pourcentage variable entre 68,0% et 74,5%, de préférence de 72,8% ;
- Al₂O₃ + TiO₂ dans un pourcentage variable entre 0,0% et 4,0%, de préférence de 0,7% ;
- Fe₂O₃ dans des pourcentages se situant dans la plage de 0,0% à 0,45%, de préférence de 0,09% ;
- CaO dans un pourcentage variant entre 8,0% et 14,0%, de préférence de 8,6% ;
- MgO dans un pourcentage se situant dans la plage de 0,0% à 4,0%, de préférence de 3,61% ;
- Na₂O dans des pourcentages se situant dans la plage de 10,0% à 16,0%, de préférence de 13,7% ;
- K₂O dans des pourcentages se situant dans la plage de 0,0% à 4,0%, de préférence de 0,2% ;
- SO₃ dans un pourcentage variable entre 0,0% et 0,3%, de préférence de 0,3%.

11. - Verre selon la revendication 10, **caractérisé par le fait qu'**il comprend une fritte de verre (2) de la composition :
- TiO₂ + SnO sur mica avec une proportion de 20000 mg/kg ;
- composés du B avec une proportion de 9000 mg/kg ;
- composés de l'Al avec une proportion de 13000 mg/kg ;
- composés du Zn avec une proportion de 12500 mg/kg ;
- (méthyl-2-méthoxyéthoxy) propanol à raison de 150000 mg/kg.
